# EUROPEAN PATENT APPLICATION

(11) **EP 4 472 267 A1**
(43) Date of publication of application: **04.12.2024**
(21) Application number: 23758977.5
(22) Date of filing: 03.02.2023
(51) Int. Cl.: H04W 24/02

(54) **BEAM FAILURE RECOVERY METHOD, APPARATUS AND SYSTEM**

(30) Priority: 28.02.2022 CN 202210186687
(71) Applicant: Huawei Technologies Co., Ltd., Shenzhen, Guangdong 518129 (CN)
(72) Inventor: WU, Hao, Shenzhen, Guangdong 518129 (CN); XU, Haibo, Shenzhen, Guangdong 518129 (CN); PENG, Wenjie, Shenzhen, Guangdong 518129 (CN)
(74) Representative: MERH-IP Matias Erny Reichl Hoffmann Patentanwälte PartG mbB
(86) International application number: PCT/CN2023/074333
(87) International publication number: WO 2023/160352

(57) **Abstract**

Embodiments of this application provide a beam failure recovery method and apparatus, and a system. The method includes: After a beam failure occurs on a first beam on a first carrier, a first terminal device activates resources of candidate beams on the first carrier. The first beam is a beam used for communication between the first terminal device and a second terminal device. The first terminal device communicates with the second terminal device based on a second beam. The second beam is one of the candidate beams. The beam failure recovery method and apparatus, and the system can reduce overheads of a beam failure recovery procedure in a sidelink system.

## Description

This application claims priority to Chinese Patent Application No. 202210186687.7, filed with the China National Intellectual Property Administration on February 28, 2022 and entitled "BEAM FAILURE RECOVERY METHOD AND APPARATUS, AND SYSTEM", which is incorporated herein by reference in its entirety.

### TECHNICAL FIELD

Embodiments of this application relate to the communication field, and in particular, to a beam failure recovery method and apparatus, and a system.

### BACKGROUND

Some wireless communication systems may support communication between communication devices, for example, communication between a plurality of terminal devices. This communication manner is referred to as sidelink communication. The sidelink communication includes but is not limited to device-to-device (device-to-device, D2D) communication, proximity-based services (ProSe) communication, vehicle-to-everything (V2X) communication, a cellular V2X (C-V2X) communication system, and the like.

In a sidelink system, because a location of a terminal device is constantly changing, communication is more likely to be blocked by an obstacle, resulting in signal propagation interruption. When a sidelink communication failure occurs, to cope with a beam failure, a resource used for beam recovery is preconfigured for the sidelink system on an existing sidelink, and a sweeping beam needs to be continuously sent, resulting in high overheads.

### SUMMARY

Embodiments of this application provide a beam failure recovery method and apparatus, and a system, to reduce overheads of a beam failure recovery procedure on a sidelink.

According to a first aspect, a beam failure recovery method is provided, including: After a beam failure occurs on a first beam on a first carrier, a first terminal device activates resources of candidate beams on the first carrier, where the resources of the candidate beams are transmit resources of a plurality of candidate beams of the first terminal device, and the first beam is a beam used for communication between the first terminal device and a second terminal device. The first terminal device communicates with the second terminal device based on a second beam, where the second beam is one of the candidate beams.

After the beam failure occurs on the first beam on the first carrier, the first terminal device activates the resources of the candidate beams on the first carrier, so that the first terminal device and the second terminal device perform beam sweeping after the beam failure, to obtain the second beam that can be used for beam recovery, and communicate with each other based on the second beam. This technical solution reduces overheads caused by beam sweeping and measurement performed in advance in a beam failure recovery procedure.

With reference to the first aspect, in some implementations of the first aspect, before the beam failure occurs on the first beam on the first carrier, the method further includes: The first terminal device sends first information to the second terminal device, where the first information indicates the resources of the candidate beams, and the resources of the candidate beams are deactivated.

With reference to the first aspect, in some implementations of the first aspect, the method further includes: The first terminal device sends candidate beam activation indication information to the second terminal device, to indicate that the deactivated resources of the candidate beams have been activated.

The first terminal device sends, to the second terminal device in advance, the pre-configured and deactivated resources of the candidate beams used for beam recovery, activates the resources of the candidate beams after the beam failure occurs, and indicates, to the second terminal device via the candidate beam activation indication information, that the resources of the candidate beams have been activated. The resources are pre-configured to speed up beam failure recovery. The resources are activated after the beam failure to reduce overheads caused by sweeping of the first terminal device and overheads caused by measurement of the second terminal device.

With reference to the first aspect, in some implementations of the first aspect, that a first terminal device activates resources of candidate beams on the first carrier includes: The first terminal device sends first information to the second terminal device, where the first information indicates the resources of the candidate beams, and the resources of the candidate beams are activated.

After the beam failure, the first terminal device sends the activated resources of the candidate beams to the second terminal device, so that the first terminal device and the second terminal device may perform beam failure recovery based on the resources of the candidate beams, to implement on-demand resource allocation. This reduces resource waste, sweeping overheads of the first terminal device, and measurement overheads of the second terminal device.

With reference to the first aspect, in some implementations of the first aspect, the method further includes: The first terminal device receives second information from the second terminal device, where the second information includes at least one of the following: a NACK feedback for the first beam, a feedback of a quantity of discontinuous transmissions for the first beam, and measurement information for the first beam. The first terminal device determines, based on the second information, that the beam failure occurs on the first beam on the first carrier.

That a beam failure occurs on a first beam on a first carrier is determined by the first terminal device. The first terminal device determines the beam failure based on the second information sent by the second terminal device, so that the first terminal device can stop, in a timely manner, sending a signal to the second terminal device via the failed beam. The beam failure recovery procedure is performed quickly and the beam failure recovery procedure is simplified.

With reference to the first aspect, in some implementations of the first aspect, that a beam failure occurs on a first beam on a first carrier is determined by the second terminal device, and before the first terminal device sends the candidate beam activation indication information to the second terminal device, the method further includes: The first terminal device receives beam recovery request information from the second terminal device, where the beam recovery request information is used to trigger the first terminal device to activate the resources of the candidate beams on the first carrier.

The second terminal device directly determines the beam failure based on a reception status of data or a reference signal. Reporting overheads of the second terminal device are reduced and beam failure detection efficiency is improved.

With reference to the first aspect, in some implementations of the first aspect, the first information further includes configuration information of a beam failure detection resource, where the configuration information of the beam failure detection resource indicates the beam failure detection resource. The second terminal device determines, based on the beam failure detection resource, that the beam failure occurs on the first beam on the first carrier.

The first terminal device pre-configures the beam failure detection resource for the second terminal device, so that the second terminal device may perform beam failure detection based on the beam failure detection resource.

With reference to the first aspect, in some implementations of the first aspect, the method further includes: The first terminal device receives beam recovery indication information from the second terminal device, where the beam recovery indication information includes beam indication information, and the beam indication information indicates the second beam. The first terminal device sends a beam recovery indication feedback to the second terminal device, where the beam recovery indication feedback is used to provide a feedback on the beam recovery indication information.

After receiving the beam recovery indication information sent by the second terminal device, the first terminal device sends the beam recovery indication feedback to the second terminal device, so that both the first terminal device and the second terminal device can know that beam recovery is performed. Reliability of beam recovery is improved.

With reference to the first aspect, in some implementations of the first aspect, received quality of a first reference signal carried on the second beam meets a first threshold, and the first threshold is included in the first information.

When configuring the resources of the candidate beams, the first terminal device also determines the first threshold for beam recovery, to ensure high communication quality of the second beam after beam recovery.

With reference to the first aspect, in some implementations of the first aspect, the beam recovery indication information is transmitted with data.

The beam recovery indication information is transmitted with the data, but feedback is performed for only the beam recovery indication information, to ensure that when receiving the beam recovery indication feedback, the second terminal device can know that beam recovery is performed.

With reference to the first aspect, in some implementations of the first aspect, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and a second carrier. The second carrier is a carrier used for communication between the first terminal device and the second terminal device.

The data is transmitted with the beam recovery indication information. The first terminal device separately performs feedback for the data and the beam recovery indication information, and carries different feedbacks on different carriers, so that the second terminal device can distinguish between the different feedbacks and learn of beam recovery, to ensure smooth information communication between the first terminal device and the second terminal device.

With reference to the first aspect, in some implementations of the first aspect, the beam recovery indication information is separately transmitted.

The beam recovery indication information is separately transmitted, so that the first terminal device does not need to provide a feedback on the data, and performs feedback for only the beam recovery indication information, to ensure that after receiving the beam recovery indication feedback, the second terminal device can know that the first terminal device has determined beam recovery. Reliability of beam recovery is improved.

According to a second aspect, a beam failure recovery method is provided, including: After a beam failure occurs on a first beam on a first carrier, a second terminal device performs one of the following operations: the second terminal device receives candidate beam activation indication information from a first terminal device, where the candidate beam activation indication information indicates that resources of candidate beams on the first carrier have been activated, and the resources of the candidate beams are transmit resources of a plurality of candidate beams of the first terminal device. The second terminal device communicates with the first terminal device based on a second beam, where the second beam is one of the candidate beams. Alternatively, the second terminal device receives first information from a first terminal device, where the first information indicates resources of candidate beams on the first carrier, the resources of the candidate beams are activated, and the resources of the candidate beams are transmit resources of a plurality of candidate beams of the first terminal device. The second terminal device communicates with the first terminal device based on a second beam, where the second beam is one of the candidate beams.

After the first beam fails, the second terminal device knows, by receiving the candidate beam activation indication information, that the resources of the candidate beams have been activated, or receives the activated resources that are of the candidate beams and that are sent by the first terminal device, to obtain, from the candidate beams corresponding to the resources of the candidate beams, the second beam for communication with the first terminal device. This reduces overheads of the first terminal device and the second terminal device in a beam recovery procedure.

With reference to the second aspect, in some implementations of the second aspect, before the beam failure occurs on the first beam on the first carrier, the method further includes: The second terminal device receives first information from the first terminal device, where the first information indicates the resources of the candidate beams on the first carrier, and the resources of the candidate beams are deactivated.

With reference to the second aspect, in some implementations of the second aspect, that a beam failure occurs on a first beam on a first carrier is determined by the first terminal device based on second information, and the method further includes: The second terminal device sends the second information to the first terminal device, where the second information includes at least one of the following: a NACK feedback for the first beam, a feedback of a quantity of discontinuous transmissions for the first beam, and measurement information for the first beam.

With reference to the second aspect, in some implementations of the second aspect, before the second terminal device receives the candidate beam activation indication information from the first terminal device, the method further includes: The second terminal device determines that the beam failure occurs on the first beam on the first carrier. The second terminal device sends beam recovery request information to the first terminal device when the beam failure occurs on the first beam on the first carrier.

With reference to the second aspect, in some implementations of the second aspect, the first information further includes configuration information of a beam failure detection resource, where the configuration information of the beam failure detection resource indicates the beam failure detection resource. That the second terminal device determines, based on the beam failure detection resource, that the beam failure occurs on the first beam on the first carrier includes: The second terminal device determines that the beam failure occurs on the first beam on the first carrier.

With reference to the second aspect, in some implementations of the second aspect, the method further includes: The second terminal device sends candidate beam recovery indication information to the first terminal device, where the beam recovery indication information includes beam indication information, and the beam indication information indicates the second beam. The second terminal device receives a beam recovery indication feedback from the first terminal device, where the beam indication feedback is used to provide a feedback on the beam recovery indication information.

With reference to the second aspect, in some implementations of the second aspect, received quality of a first reference signal carried on the second beam meets a first threshold, and the first threshold is included in the first information.

With reference to the second aspect, in some implementations of the second aspect, the beam recovery indication information is transmitted with data.

With reference to the second aspect, in some implementations of the second aspect, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and the first carrier.

With reference to the second aspect, in some implementations of the second aspect, the beam recovery indication information is separately transmitted.

According to a third aspect, a beam failure recovery apparatus is provided, including: a processing unit, configured to: after a beam failure occurs on a first beam on a first carrier, activate resources of candidate beams on the first carrier, where the resources of the candidate beams are transmit resources of a plurality of candidate beams of the apparatus, and the first beam is a beam used for communication between a first terminal device and a second terminal device; and a transceiver unit, configured to communicate with the second terminal device based on a second beam, where the second beam is one of the plurality of candidate beams.

The processing unit activates the resources of the candidate beams on the first carrier after the beam failure, so that a beam recovery procedure can be performed. The transceiver unit is finally used for communication based on the second beam in the candidate beams. This can reduce transmit overheads caused by sweeping beams by the beam recovery apparatus before the beam failure and overheads caused by performing measurements by the second terminal device.

With reference to the third aspect, in some implementations of the third aspect, the transceiver unit is further configured to send first information to the second terminal device, where the first information indicates the resources of the candidate beams, and the resources of the candidate beams are deactivated.

With reference to the third aspect, in some implementations of the third aspect, the transceiver unit is further configured to send candidate beam activation indication information to the second terminal device, to indicate that the deactivated resources of the candidate beams have been activated.

With reference to the third aspect, in some implementations of the third aspect, the processing unit is specifically configured to send first information to the second terminal device, where the first information indicates the resources of the candidate beams, and the resources of the candidate beams are activated.

With reference to the third aspect, in some implementations of the third aspect, the transceiver unit is further configured to receive second information from the second terminal device, where the second information includes at least one of the following: a NACK feedback for the first beam, a feedback of a quantity of discontinuous transmissions for the first beam, and measurement information for the first beam. The processing unit is further configured to determine, based on the second information, that the beam failure occurs on the first beam on the first carrier.

With reference to the third aspect, in some implementations of the third aspect, that a beam failure occurs on a first beam on a first carrier is determined by the second terminal device. The transceiver unit is further configured to receive beam recovery request information from the second terminal device, where the beam recovery request information is used to trigger the first terminal device to activate the resources of the candidate beams on the first carrier.

With reference to the third aspect, in some implementations of the third aspect, the first information further includes configuration information of a beam failure detection resource, where the configuration information of the beam failure detection resource indicates the beam failure detection resource. The second terminal device determines, based on the beam failure detection resource, that the beam failure occurs on the first beam on the first carrier.

With reference to the third aspect, in some implementations of the third aspect, the transceiver unit is further configured to: receive beam recovery indication information from the second terminal device, where the beam recovery indication information includes beam indication information, and the beam indication information indicates the second beam; and send a beam recovery indication feedback to the second terminal device, where the beam recovery indication feedback is used to provide a feedback on the beam recovery indication information.

With reference to the third aspect, in some implementations of the third aspect, received quality of a first reference signal carried on the second beam meets a first threshold, and the first threshold is included in the first information.

With reference to the third aspect, in some implementations of the third aspect, the beam recovery indication information is transmitted with data.

With reference to the third aspect, in some implementations of the third aspect, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and a second carrier. The second carrier is a carrier used for communication between the first terminal device and the second terminal device.

With reference to the third aspect, in some implementations of the third aspect, the beam recovery indication information is separately transmitted.

According to a fourth aspect, a beam failure recovery apparatus is provided, including: a transceiver unit, configured to: after a beam failure occurs on a first beam on a first carrier, perform one of the following operations: receiving candidate beam activation indication information from a first terminal device, where the candidate beam activation indication information indicates that resources of candidate beams on the first carrier have been activated, and the resources of the candidate beams are transmit resources of a plurality of candidate beams of the first terminal device; and communicating with the first terminal device based on a second beam, where the second beam is one of the candidate beams; or receiving first information from a first terminal device, where the first information indicates resources of candidate beams on the first carrier, the resources of the candidate beams are activated, and the resources of the candidate beams are transmit resources of a plurality of candidate beams of the first terminal device; and communicating with the first terminal device based on a second beam, where the second beam is one of the candidate beams.

After the beam failure occurs on the first beam on the first carrier, the beam failure recovery apparatus knows, by receiving the candidate beam activation indication information from the first terminal device, that the resources of the candidate beams have been activated, or receives the activated resources that are of the candidate beams and that are from the first terminal device, to finally determine the second beam based on the two manners, to reduce measurement overheads caused by measuring beams in advance.

With reference to the fourth aspect, in some implementations of the fourth aspect, the transceiver unit is further configured to receive first information from the first terminal device, where the first information indicates the resources of the candidate beams on the first carrier, and the resources of the candidate beams are deactivated.

With reference to the fourth aspect, in some implementations of the fourth aspect, that a beam failure occurs on a first beam on a first carrier is determined by the first terminal device based on second information, and the transceiver unit is further configured to send the second information to the first terminal device, where the second information includes at least one of the following: a NACK feedback for the first beam, a feedback of a quantity of discontinuous transmissions for the first beam, and measurement information for the first beam.

With reference to the fourth aspect, in some implementations of the fourth aspect, the apparatus further includes a processing unit, configured to determine that a beam failure occurs on a first beam on a first carrier. The transceiver unit is further configured to send beam recovery request information to the first terminal device when the beam failure occurs on the first beam on the first carrier.

With reference to the fourth aspect, in some implementations of the fourth aspect, the first information further includes configuration information of a beam failure detection resource, where the configuration information of the beam failure detection resource indicates the beam failure detection resource. The processing unit is specifically configured to determine, based on the beam failure detection resource, that the beam failure occurs on the first beam on the first carri er.

With reference to the fourth aspect, in some implementations of the fourth aspect, the transceiver unit is further configured to: send candidate beam recovery indication information to the first terminal device, where the beam recovery indication information includes beam indication information, and the beam indication information indicates the second beam; and receive a beam recovery indication feedback from the first terminal device, where the beam indication feedback is used to provide a feedback on the beam recovery indication information.

With reference to the fourth aspect, in some implementations of the fourth aspect, received quality of a first reference signal carried on the second beam meets a first threshold, and the first threshold is included in the first information.

With reference to the fourth aspect, in some implementations of the fourth aspect, the beam recovery indication information is transmitted with data.

With reference to the fourth aspect, in some implementations of the fourth aspect, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and the first carrier.

With reference to the fourth aspect, in some implementations of the fourth aspect, the beam recovery indication information is separately transmitted.

According to a fifth aspect, a communication apparatus is provided, including a processor and a communication interface. The communication interface is configured to receive a signal from a communication apparatus other than the communication apparatus and transmit the signal to the processor, or to send a signal from the processor to a communication apparatus other than the communication apparatus. The processor is configured to implement and perform the method according to any one of the first aspect or implementations of the first aspect or the method according to any one of the second aspect or implementations of the second aspect by using a logic circuit or by executing code instructions.

According to a sixth aspect, a communication system is provided, including the apparatus according to any one of the third aspect or implementations of the third aspect or the apparatus according to any one of the fourth aspect or implementations of the fourth aspect.

According to a seventh aspect, a computer-readable storage medium is provided. The computer-readable storage medium stores a computer program. When the computer program is run, a computer is enabled to perform the method according to any one of the first aspect or implementations of the first aspect and the method according to any one of the second aspect or implementations of the second aspect.

According to an eighth aspect, a computer program product is provided. The computer program product includes computer program code. When the computer program code is run, the method according to any one of the first aspect or implementations of the first aspect and the method according to any one of the second aspect or implementations of the second aspect are implemented.

### BRIEF DESCRIPTION OF DRAWINGS

FIG. 1 is a diagram of an architecture of a communication system applicable to an embodiment of this application;
FIG. 2 is a schematic flowchart of a procedure of establishing dual carriers between terminal devices;
FIG. 3 is a schematic flowchart of a beam failure recovery method according to an embodiment of this application;
FIG. 4 is a schematic flowchart of a beam failure recovery method according to an embodiment of this application;
FIG. 5 is a schematic flowchart of a beam failure recovery method according to an embodiment of this application;
FIG. 6 is a schematic flowchart of a beam failure recovery method according to an embodiment of this application;
FIG. 7 is a schematic flowchart of a beam failure recovery method according to an embodiment of this application;
FIG. 8 is a block diagram of a beam failure recovery apparatus according to an embodiment of this application;
FIG. 9 is a block diagram of a beam failure recovery apparatus according to an embodiment of this application; and
FIG. 10 is a block diagram of a beam failure recovery apparatus according to an embodiment of this application.

### DESCRIPTION OF EMBODIMENTS

The following describes technical solutions of embodiments in this application with reference to accompanying drawings.

The technical solutions in embodiments of this application are applicable to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a vehicle-to-everything (vehicle-to-everything, V2X) system, a V2X system based on enhanced proximity-based services (proximity-based services, ProSe), a long term evolution-vehicle (long term evolution-vehicle, LTE-V) system, an internet of vehicles system, a machine type communication (machine type communication, MTC) system, an internet of things (internet of things, IoT) system, a long term evolution-machine (long term evolution-machine, LTE-M) system, a machine-to-machine (machine-to-machine, M2M) system, a non-terrestrial network (non-terrestrial network, NTN) system, another future evolved communication system, or the like, where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

To facilitate understanding of embodiments of this application, terms used in this application are first briefly described.

### 1. Broadcast and groupcast communication manners on a sidelink

The broadcast or groupcast on the sidelink means that a broadcast signal or a groupcast signal sent by one terminal device can be received by one or more terminal devices. For example, a destination layer-2 identifier (destination layer-2 ID) used when service data is transmitted over a PC5 interface is predefined. When a transmit device needs to send the broadcast service data, the transmit device may directly send the broadcast service data via a user plane protocol stack, and include, at a media access control (media access control protocol, MAC) layer and/or a physical (physical, PHY) layer, the destination layer-2 ID corresponding to the broadcast service. A terminal device interested in the broadcast service may detect, at the PHY layer, whether there is service data for the destination layer-2 ID corresponding to the broadcast service, and receive and parse the service data. However, this application is not limited thereto.

### 2. Unicast communication manner on a sidelink

The unicast is a one-to-one communication manner of terminal devices. A transmit device indicates, via a destination address, a receive device for a unicast signal sent by the transmit device. The receive device determines, based on the destination address of the unicast signal, whether the unicast signal is sent to the receive device, and determines, based on a source address of the unicast signal, which device sends the unicast signal. Optionally, the two terminal devices may establish a unicast connection between the two devices through signaling interaction, and may perform unicast communication after the unicast connection is established.

### 3. Sidelink transmission mode 1 (mode 1)

The sidelink mode 1 means that a terminal device determines, based on a sidelink scheduling grant (sidelink grant) sent by a network device, a resource used to send a sidelink signal. The sidelink scheduling grant is used to grant the terminal device a dedicated resource for sending the sidelink signal. For example, before sending the sidelink signal, the terminal device reports a buffer status report (buffer status report, BSR) to the network device, to notify the network device of an amount of to-be-sent data, and the network device grants the terminal device a corresponding resource based on the amount of the data reported by the terminal device.

### 4. Sidelink transmission mode 2 (mode 2)

The sidelink mode 2 means that a network device pre-allocates sidelink resources for contention. A plurality of terminal devices may contend for a resource in the sidelink resources for contention. When a terminal device obtains the resource through contention, the terminal device may send a sidelink signal via the resource obtained through contention. For example, the terminal device selects, based on measurement about whether each time-frequency resource in sidelink resources is occupied, an unoccupied resource for transmission. However, this application is not limited thereto.

### 5. Carrier

Electromagnetic spectrum is usually subdivided into various categories, frequency bands, channels, and the like based on frequency/wavelength. In 5G NR, two frequency band ranges are defined: FR1 and FR2. FR1 (410 MHz-7.125 GHz) indicates low-frequency carriers. FR2 (24.25 GHz-52.6 GHz) indicates millimeter-wave high-frequency carriers, which is an extended frequency band of 5G. Frequencies between FR1 and FR2 are referred to as mid-frequency band carriers.

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

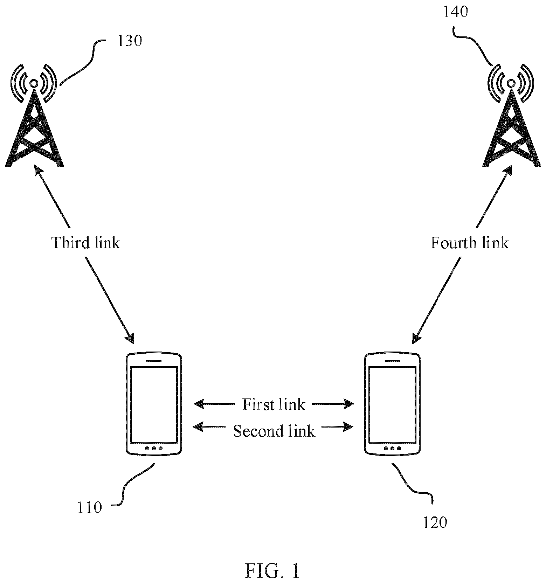

FIG. 1 is a diagram of an architecture of a communication system applicable to an embodiment of this application.

As shown in FIG. 1, the communication system includes terminal devices and network devices. The terminal device communicates with the network device through an uplink or a downlink, and there may be a sidelink between the terminal devices. For example, the communication system may include a first terminal device 110, a second terminal device 120, a first network device 130, and a second network device 140. The first terminal device 110 communicates with the first network device 130 through a third link. The second terminal device 120 communicates with the second network device 140 through a fourth link. There is a sidelink between the first terminal device 110 and the second terminal device 120, and the sidelink is established on at least two carriers. For example, the sidelink includes a first link and a second link, where the first link is established on a first carrier, and the second link is established on a second carrier.

The at least two carriers may include one primary carrier and at least one secondary carri er.

The primary carrier may be a carrier established when the terminal device performs an initial unicast connection, or the primary carrier may be a carrier re-established when the terminal device performs a PC5-RRC connection. The primary carrier may be used for RRC communication between the terminal devices.

The secondary carrier may be configured to provide an additional radio resource. For example, there is no PC5-RRC communication between the terminal devices on the secondary carrier, and the secondary carrier may be added/modified/released based on a PC5-RRC reconfiguration message after a security activation procedure. Alternatively, there may be PC5-RRC communication on the secondary carrier.

The communication system includes two types of interfaces: a PC5 interface and a Uu interface. The PC5 interface is a direct connection interface between the terminal devices. In other words, the PC5 interface may connect the first terminal device to the second terminal device. The Uu interface is an interface connecting the terminal device to the network device. In other words, the Uu interface may connect the first terminal device 110 to the first network device 130, and connect the second terminal device 120 to the second network device 140.

In this application, only FIG. 1 is used as an example for describing the technical solutions of this application. It may be understood that both the first terminal device and the second terminal device may alternatively be connected to one network device, so that the first terminal device and the second terminal device may obtain corresponding resource configurations via the network device. A connection manner of the communication system shown in FIG. 1 in this application is not intended to limit the protection scope of this application.

It should be understood that in FIG. 1, only an example in which the communication system includes the first terminal device, the first network device, the second terminal device, and the second network device is used for describing the technical solutions of this application. The communication system may include only the first terminal device and the second terminal device, or may include more terminal devices and network devices. A quantity of communication devices in embodiments of this application should not be construed as a limitation on the application scope of this application.

The terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). A specific form of the terminal device is not limited in embodiments of this application.

The network device in embodiments of this application may be a device configured to communicate with the terminal device. The network device may be a base station (base transceiver station, BTS) in a global system for mobile communications (global system for mobile communications, GSM) system or a code division multiple access (code division multiple access, CDMA) system, a base station (NodeB, NB) in a wideband code division multiple access (wideband code division multiple access, WCDMA) system, an evolved base station (evolved NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in embodiments of this application.

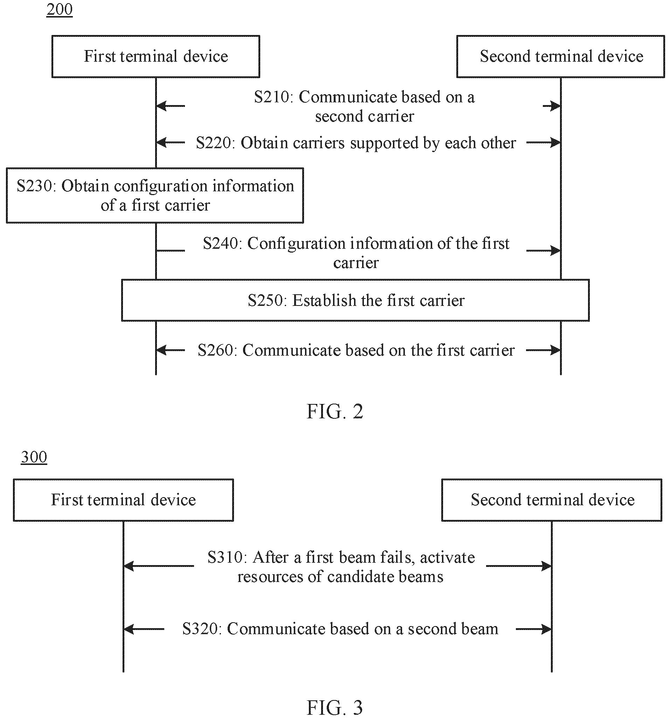

An example in which a second carrier is an anchor carrier between a first terminal device and a second terminal device is used. For example, FIG. 2 shows a procedure of establishing the second carrier between the first terminal device and the second terminal device.

S210: The first terminal device and the second terminal device communicate with each other based on the second carrier.

The second carrier may be a primary carrier or the anchor carrier used by the first terminal device and the second terminal device.

S220: The first terminal device and the second terminal device obtain a carrier supported by each other.

If both the first terminal device and the second terminal device support multi-carrier communication, in a specific scenario, for example, when the first terminal device and the second terminal device need to speed up service transmission or improve transmission reliability, in addition to the second carrier, another secondary carrier may be used for transmission. Therefore, the first terminal device may first communicate with the second terminal device, to learn of a secondary carrier supported by each other. When both the first terminal device and the second terminal device support a first carrier to serve as a secondary carrier for communication, a procedure of establishing the first carrier may be performed.

S230: The first terminal device obtains configuration information of the first carrier.

For the first terminal device and the second terminal device, the first terminal device may be a transmit device. Therefore, when knowing that the second terminal device also supports the first carrier, the first terminal device may send request information to the network device to obtain the configuration information of the first carrier, where the configuration information of the first carrier may include configuration information such as a time-frequency resource or a space resource.

S240: The first terminal device sends the configuration information of the first carrier to the second terminal device.

The first terminal device sends the obtained configuration information of the first carrier to the second terminal device, to trigger a procedure of beam pairing between the first terminal device and the second terminal device on the first carrier. The first terminal device and the second terminal device separately obtain beams with high communication quality, to establish communication between the first terminal device and the second terminal device on the first carrier.

S250: Establish the first carrier.

Specifically, the procedure of establishing the first carrier may include two phases: coarse-grained beam pairing and fine-grained beam pairing.

The coarse-grained beam pairing phase may include the following steps.

Step 1: The first terminal repeatedly sends first request information to the second terminal device via a plurality of first to-be-selected beams.

The first request information includes direct communication request (direct communication request, DCR) information, and the first terminal device triggers a connection to the second terminal device via the DCR information. The first request information is sent by the first terminal device based on the first to-be-selected beams in different directions via a hybrid automatic repeat request (hybrid automatic repeat request, HARQ), a packet data convergence protocol (packet data convergence protocol, PDCP), or a PC5 signaling protocol layer (PC5-signal, PC5-S), to form beam sweeping.

Step 2: The first terminal device sends a quantity of the first to-be-selected beams to the second terminal device.

The first terminal device sends the quantity of the first to-be-selected beams to the second terminal device, so that the second terminal device can receive the first request information based on the quantity of the candidate beams, quickly traverse all transmit/receive beam combinations, and select a beam with received quality that meets a preset condition or a beam with best quality that meets the preset condition, to determine a beam 2 in step 3.

Step 3: The second terminal device measures the first request information, to determine the beam 2 used by the second terminal device.

The beam 2 may be a beam with best received quality in second to-be-selected beams or a beam with received quality that meets a first threshold.

Step 4: The second terminal device sends first feedback information to the first terminal device by using the beam 2.

Correspondingly, the first terminal device receives the first feedback information from the first terminal device by using the plurality of the first to-be-selected beams.

In step 4, the first feedback information includes direct communication accept (direct communication accept, DCA) information, and is a feedback for the DCR information.

Step 5: The first terminal device measures the first feedback information, to determine a beam 1.

Optionally, the first request information in step 1 includes beam indication information of the first to-be-selected beams, and the first feedback information in step 4 includes indication information of a first to-be-selected beam that carries the first request information and that corresponds to the second beam. After successfully decoding the first feedback information, the first terminal device may stop beam sweeping and measurement, and directly determine the beam 1 based on the indication information of the first to-be-selected beam, without comparing received quality. Sweeping overheads and measurement overheads of the first terminal device are reduced.

In this way, after step 1 to step 5, the first terminal device and the second terminal device may determine respective coarse-grained beams, and further determine fine-grained beams based on the coarse-grained beams.

In a procedure of determining the fine-grained beams, the first terminal device further refines the beam 1 through beamforming based on the beam 1, and the second terminal device further refines the beam 2 through beamforming based on the beam 2. The first terminal device and the second terminal device send the reference signal to each other via refined beams, to determine respective fine-grained beams with high quality based on measurement results of the reference signal.

In addition, to further enable the beam pairing procedure to proceed at any time, a dedicated resource may be set up for the reference signal, that is, to allow the reference signal not to be transmitted with data on the sidelink. A dedicated transmit channel for a reference signal may be set up, that is, to allow reference signals on different sidelinks to share a channel, or a transmit resource that is used for a reference signal on only one sidelink is set up.

S260: The first terminal device and the second terminal device communicate with each other based on the first carrier.

After the first carrier or more carriers are introduced to form carrier aggregation, carriers used by the terminal device on the sidelink may include one primary carrier and at least one secondary carrier. In other words, both the second carrier and another carrier of the terminal device may be available carriers of the terminal device. Carrier aggregation supports the terminal device to transmit data on both the first carrier and the second carrier.

The second carrier may be a carrier established when the terminal device performs an initial unicast connection, or the second carrier may be a carrier re-established when the terminal device performs a PC5-RRC connection. The second carrier may be used for RRC communication between the network device and the terminal device. The second carrier may be the primary carrier or the secondary carrier.

The first carrier may be configured to provide an additional radio resource. For example, there may be no PC5-RRC communication between the terminal devices on the first carrier, and the first carrier may be added/modified/released based on a PC5-RRC reconfiguration message after a security activation procedure. In this case, the first carrier may be the secondary carrier.

Alternatively, there may be PC5-RRC communication between the terminal devices on the first carrier. In this case, the first carrier may be the secondary carrier or the primary carrier.

FIG. 3 is a schematic flowchart of a beam failure recovery method according to an embodiment of this application.

S310: After a beam failure occurs on a first beam on a first carrier, a first terminal device may activate resources of candidate beams on the first carrier, where the resources of the candidate beams are transmit resources of a plurality of candidate beams of the first terminal device, and the first beam is a beam used for communication between the first terminal device and a second terminal device.

In S310, because the first carrier between the first terminal device and the second terminal device is unavailable, the first terminal device and the second terminal device need to transmit various pieces of signaling for beam recovery, that is, information below that needs to be transmitted after the beam failure, for example, beam recovery request information, candidate beam activation indication information, beam recovery indication information, and beam recovery indication feedback. The signaling may be relayed by another terminal device, for example, a third terminal device, or a network device, to ensure smooth communication between the first terminal device and the second terminal device. In addition, the signaling may alternatively be transmitted on another carrier, for example, a second carrier, between the first terminal device and the second terminal device. The following describes the beam failure recovery method provided in an embodiment of this application with reference to an example in which various pieces of information are transmitted on the second carrier.

When the beam recovery procedure needs assistance of the second carrier, the sidelink between the first terminal device and the second terminal device is configured on at least two carriers of different frequencies. Two carriers are used as an example. For example, the second carrier is within FR1, and the first carrier is within FR2. The second carrier may be an anchor carrier or a primary carrier, and the first carrier may be a secondary carrier. Alternatively, the second carrier is within FR2, and the first carrier is within FR1. The first carrier may be a primary carrier or an anchor carrier, and the second carrier may be a secondary carrier. The first terminal device and the second terminal device may or may not send or receive the signal via both of the two carriers, and the signal may be data, signaling, a reference signal, or the like.

For signal transmission, the first terminal device is a transmit terminal device, and the second terminal device is a receive terminal device. Alternatively, the first terminal device may be a receive terminal device, and the second terminal device is a transmit terminal device.

Different from time division multiplexing and frequency division multiplexing, beamforming is based on spatial division multiplexing. Abeam is formed by concentrating energy of a signal in a specific direction. The beam allows a communication system to further increase spatial resources beyond time-domain and frequency-domain resources, enabling support for more users. In addition, concentrating a signal in one direction allows for longer-distance signal transmission. When communication is performed between devices, the devices may perform sending or reception via respective beams. There is no difference between a transmit beam and a receive beam. When the beam is used for sending, the beam may be referred to as a transmit beam, or when the beam is used for receiving, the beam may be referred to as a receive beam. The first beam may be a beam used for communication between the first terminal device and the second terminal device based on the first carrier. When a beam failure occurs, it may be considered that the failure occurs on beams used by the first terminal device and the second terminal device. In this application, only an example in which the beam used by the first terminal device is the first beam is used for describing the technical solutions of this application. The beam used by the second terminal device when the beam failure occurs is not described in detail.

That the beam failure occurs on the first beam on the first carrier means that the first terminal device and the second terminal device cannot send or receive a signal via the first beam. The beam failure may be caused by an obstacle that is on a sidelink when the first terminal device or the second terminal device moves.

In addition to the first carrier, the first terminal device may alternatively communicate with the second terminal device based on another carrier. When a beam failure occurs on a beam on one carrier, a beam on another carrier may still be used for normal communication.

In some embodiments, if the first terminal device communicates with the second terminal device based on two or more beams on the first carrier, when the beam failure occurs on one beam, another beam may still be used for normal communication.

The beam failure may be determined based on measurement information of a reference signal on the first carrier. The reference signal may be a channel state information reference signal (channel state information reference signal, CSI-RS) on the sidelink, a synchronization signal block (synchronization signal/physical broadcast channel block, SSB) on the sidelink, or the like. The measurement information may include L1 or L3 reference signal received power (reference signal received power, RSRP), reference signal received quality (reference signal received quality, RSRQ), or a signal to interference plus noise ratio (signal to interference plus noise ratio, SINR), or the like that is less than a preset threshold. The beam failure may alternatively be determined based on feedback information for the first beam. The feedback information may be that NACK feedback information carried on a physical sidelink feedback channel (physical sidelink feedback channel, PSFCH), a quantity of discontinuous transmissions (discontinuous transmissions, DTXs), or the like is greater than a preset threshold within a period of time.

In an embodiment of this application, that a beam failure occurs on a first beam on a first carrier is determined by the first terminal device. The first terminal device is a transmit terminal device for a signal. That a beam failure occurs on a first beam on a first carrier is determined by the first terminal device includes: The first terminal device receives second information from the second terminal device. Correspondingly, the second terminal device sends the second information to the first terminal device. The second information includes at least one of the following: a NACK feedback for the first beam, a feedback of a quantity of discontinuous transmissions for the first beam, and measurement information for the first beam. The first terminal device determines, based on the second information, that the beam failure occurs on the first beam on the first carrier.

When the second terminal device fails to receive data sent via the first carrier by the first terminal device or the second terminal device fails to decode data sent via the first carrier by the first terminal device, the second terminal device feeds back a negative acknowledgment NACK to the first terminal device. When a quantity of NACKs received by the first terminal device within specific time exceeds a preset threshold, the first terminal device may determine that the beam failure occurs on the first beam on the first carrier.

The second terminal device may measure reference signal received quality on the first carrier, and feed back measurement information to the first terminal device. The first terminal device determines, based on the measurement information that is fed back by the second terminal device, whether the beam failure occurs.

In some embodiments, the second terminal device feeds back the received quality on the first carrier based on a request or a command of the first terminal device, or the second terminal device is triggered by the first terminal device to feed back the received quality.

For example, the first terminal device sends feedback resource information to the second terminal device, and the feedback resource information is used by the second terminal device to feed back the measurement information.

Correspondingly, the second terminal device receives the feedback resource information sent by the first terminal device.

The first terminal device sends the feedback resource information to the second terminal device. The feedback resource information may be sent via sidelink control information (sidelink control information, SCI) or PC5-radio resource control (PC5-radio resource control, PC5-RRC) information. The information may trigger the second terminal device to provide a feedback on the L1 or L3 RSRP, RSRQ, or SINR. In this way, the second terminal device may perform feedback on a corresponding feedback resource. Content that is fed back is the measurement information. The second terminal device may periodically or aperiodically feed back the received quality on the first carrier.

In some other embodiments, the second terminal device actively feeds back the received quality on the first carrier to the first terminal device. For example, the second terminal device may periodically or aperiodically and actively feed back, to the first terminal device via media access control-control element (media access control-control element, MAC CE), PC5-S or PC5-RRC information, a measurement result of the L1 or L3 RSRP, RSRQ, or SINR.

Because the first terminal device is a signal transmitter, when determining that the beam failure occurs on the first beam on the first carrier, the first terminal device may actively suspend transmission of data or signaling, and perform beam recovery in a timely manner, to avoid a data or signaling loss. This simplifies a beam recovery procedure.

In an embodiment of this application, that the beam failure occurs on the first carrier on the first terminal device may be determined by the second terminal device. The second terminal device may be a receive terminal device for a signal. The receive terminal device may directly determine, based on the measurement result of the reference signal on the first carrier, that the beam failure occurs on the first beam on the first carrier.

The second terminal device is the receive terminal device for a signal, and the second terminal device directly determines, based on a signal received status, that the beam failure occurs. This reduces feedback load of the second terminal device, and simplifies a beam failure determining procedure.

After the first terminal device or the second terminal device determines that the beam failure occurs on the first beam on the first carrier, resources of candidate beams on the first carrier can be activated.

Activating the resources of the candidate beams on the first carrier means that the first terminal device starts to use the resources to send a first reference signal to the second terminal device via a plurality of candidate beams. Before the resources are activated, the first terminal device does not send the first reference signal via the resources.

The resources of the candidate beams are beam resources configured by the first terminal device or a first network device for beam failure recovery, and the resources of the candidate beams may be CSI-RS beam resources or SSB beam resources.

The candidate beams corresponding to the resources of the candidate beams may be a plurality of beams of the first terminal device on the first carrier. Alternatively, the resources of the candidate beams may be a plurality of beams on another carrier. The following only uses an example in which the candidate beams are a plurality of beams on the first carrier for describing the technical solutions of this application. For a technical solution in which the candidate beams are the plurality of beams on another carrier, refer to the following descriptions. For brevity, details are not described again.

Beam management resource numbers or the like may be used for indicating the resources of the candidate beams.

In some embodiments, after the beam failure occurs on the first beam on the first carrier, the first terminal device activates the resources of the candidate beams, and indicates, to the second terminal device via candidate beam activation indication information, that the resources have been activated. In other words, the first terminal device sends the candidate beam activation indication information to the second terminal device, to indicate that the deactivated resources of the candidate beams have been activated. Before the beam failure occurs on the first beam on the first carrier, the method further includes: The first terminal device sends first information to the second terminal device, where the first information indicates the resources of the candidate beams, and the resources of the candidate beams are deactivated.

Correspondingly, the second terminal device receives the candidate beam activation indication information from the first terminal device, where the candidate beam activation indication information indicates that the resources of the candidate beams on the first carrier have been activated. The second terminal device communicates with the first terminal device based on a second beam, where the second beam is one of the candidate beams. Before the second terminal device receives the candidate beam activation indication information from the first terminal device, the method further includes: The second terminal device receives first information from the first terminal device, where the first information indicates the resources of the candidate beams on the first carrier, and the resources of the candidate beams are deactivated.

In other words, after activating the resources of the candidate beams, the first terminal device indicates, to the second terminal device via the candidate beam activation indication information, that the deactivated resources of the candidate beams have been activated. The candidate beam activation indication information may be transmitted via MAC CE, PC5-RRC, or PC5-S signaling. This behavior of activating the resources of the candidate beams after the beam failure can reduce resource waste and speed up the beam recovery procedure. The resources of the candidate beams configured by the first terminal device are deactivated. In this way, the first terminal device sends the resources of the candidate beams to the second terminal device in advance, but does not send the first reference signal for sweeping at the same time, and sends the sweeping beam when necessary. This can reduce overheads caused by unnecessary beam sweeping performed by the first terminal device.

For example, when that the beam failure occurs on the first carrier is determined by the second terminal device, before the beam failure occurs, the first terminal device sends, to the second terminal device via the first information, the first information indicating the resources of the candidate beams, where the resources of the candidate beams are deactivated. The first information may be sent via PC5-RRC on the second carrier that is used for normal communication. After the second terminal device determines that the first carrier fails, the second terminal device may alternatively send beam recovery request information to the first terminal device. Correspondingly, the first terminal device receives the beam recovery request information from the second terminal device, where the beam recovery request information is used to trigger the first terminal device to activate the resources of the candidate beams on the first carrier. The beam recovery request information may be sent via the MAC CE, PC5-RRC, or PC5-S signaling. In this way, after activating the resources of the candidate beams, the first terminal device may send the candidate beam activation indication information to the second terminal device. Correspondingly, the second terminal device receives the candidate beam activation indication information. The candidate beam activation indication information may be sent via the MAC CE, PC5-RRC, or PC5-S signaling, and indicates that the deactivated resources of the candidate beams have been activated. After receiving the candidate beam activation indication information, the second terminal device may receive the first reference signal in a beam sweeping manner, perform measurement, and select a proper candidate beam to perform the beam recovery procedure.

In an embodiment of this application, when that a beam failure occurs on a first beam on a first carrier is determined by the second terminal device, the first information further includes configuration information of a beam failure detection resource, where the configuration information of the beam failure detection resource indicates the beam failure detection resource. That a beam failure occurs on a first beam on a first carrier is determined by the second terminal device based on the beam failure detection resource.

It should be understood that when determining that the beam failure occurs on the first beam on the first carrier, the second terminal may not need to know display identifier information of the first beam. When communicating with the first terminal device, the second terminal device knows a resource corresponding to the first beam, and the second terminal device may know only resource indication information that implicitly indicates the first beam.

In an embodiment, the beam failure detection resource may be a dedicated resource that is used for detecting a beam failure and that is directly configured by the first terminal device for the second terminal device or indirectly configured by a network device using the first terminal device for the second terminal device. For example, the second terminal device may measure, on the resource, received quality of a signal for beam failure detection, to determine whether a beam failure occurs.

For another example, when that a beam failure occurs on a first beam on a first carrier is determined by the first terminal device, before determining that the beam failure occurs on the first beam on the first carrier, the first terminal device has sent, to the second terminal device, the first information indicating the resources of the candidate beams, where the resources of the candidate beams are deactivated. After determining that the beam failure occurs on the first beam on the first carrier, the first terminal device may actively activate the resources of the candidate beams and send the candidate beam activation indication information to the second terminal device. In this way, the second terminal device may perform beam sweeping to receive the first reference signal sent after the first terminal device activates the resources of the candidate beams, measure the candidate beams, and select a proper candidate beam corresponding to the resource, to perform the beam recovery procedure.

In some other embodiments, that the first terminal device activates the resources of the candidate beams on the first carrier includes: The first terminal device sends first information to the second terminal device, where the first information indicates the resources of the candidate beams, and the resources of the candidate beams are activated.

Correspondingly, the second terminal device receives the first information from the first terminal device, where the first information indicates the resources of the candidate beams on the first carrier, and the resources of the candidate beams are activated. The second terminal device communicates with the first terminal device based on a second beam, where the second beam is one of the candidate beams.

In other words, the first terminal device directly activates the resources of the candidate beams on the first carrier by sending the first information indicating the activated resources of the candidate beams. The first information may be sent via the PC5-RRC signaling on the second carrier that is used for normal communication. In an embodiment, that the beam failure occurs on the first beam on the first carrier is determined by the first terminal device. After determining the beam failure, the first terminal device may send the first information to the second terminal device. The resources that are of the candidate beams and that are indicated by the first information are activated. Therefore, the first terminal device may also send, to the second terminal device, a sweeping beam for beam recovery. The sweeping beam is sent after the beam failure, and no waste is caused.

Optionally, that a beam failure occurs on a first beam on a first carrier is determined by the second terminal device. After determining the beam failure, the second terminal device may notify the first terminal device of the beam failure via signaling, so that the first terminal device may send the first information to the second terminal device. The first information indicates the resources of the candidate beams, and the resources of the candidate beams are activated. In this way, the second terminal device continues to perform another operation.

Certainly, when the second terminal device determines the beam failure and the resources that are of the candidate beams and that are configured by the first terminal device are activated, more preferably, the first terminal device sends, to the second terminal device before the beam failure, the first information indicating the resources of the candidate beams. In this way, when determining that the beam failure occurs, the second terminal device may directly perform the beam recovery procedure, to perform beam sweeping for the first reference signal carried by the candidate beams corresponding to the resources, and select a proper candidate beam for beam recovery. This can shorten resource configuration time, and improve beam recovery efficiency.

For a scenario in which the second terminal device determines the beam failure, the first information further includes configuration information of a beam failure detection resource, where the configuration information of the beam failure detection resource indicates the beam failure detection resource. That a beam failure occurs on a first beam on a first carrier is determined by the second terminal device based on the beam failure detection resource.

When activating the resources of the candidate beams on the first carrier, the first terminal device may start the beam recovery procedure and send the first reference signal to the second terminal device via the candidate beams. Therefore, after receiving the candidate beam activation indication information, the second terminal device may directly perform beam sweeping to receive the first reference signal carried on the candidate beams.

The resources of the candidate beams may indicate transmit resources of a plurality of candidate beams of the first terminal device.

For example, the first terminal device sends the first reference signal to the second terminal device via the plurality of candidate beams on the first carrier. Correspondingly, the second terminal device receives, via one beam, the first reference signal sent by the first terminal device, and the beam of the second terminal device may be preset. In this way, the second terminal device may measure, on corresponding resources, the first reference signal sent via the plurality of candidate beams, and feed back a candidate beam with good received quality as the second beam, so that the first terminal device may communicate with the second terminal device based on the second beam.

For another example, the first terminal device may send the first reference signal to the second terminal device via the plurality of candidate beams, and the second terminal device receives the first reference signal via a plurality of beams. The second terminal device may determine a good beam of the second terminal device as a receive beam, and determine a good candidate beam of the first terminal device as the second beam. The first terminal device and the second terminal device may use respective beams with good communication quality as communication beams.

In some embodiments, the resources of the candidate beams may alternatively indicate a resource of one candidate beam of the first terminal device, so that the first terminal device sends the first reference signal to the second terminal device via the candidate beam. Correspondingly, the second terminal device may receive the first reference signal via a plurality of beams based on the resources of the candidate beams, and perform measurement. The second terminal device only needs to determine a beam with good received quality of the second terminal device. The candidate beam of the first terminal device is the second beam, and the first terminal device communicates with the second terminal device based on the second beam.

Because the first terminal device has indicated the resources of the candidate beams to the second terminal device in S310, the second terminal device may receive the first reference signal on corresponding resources based on the resources of the candidate beams.

In a beam sweeping procedure, the second terminal device measures received quality on the candidate beams, to select a candidate beam with received quality that meets a preset condition as the second beam.

In some embodiments, when received quality on a current candidate beam reaches a first threshold, the second terminal device may stop beam sweeping, and use the candidate beam as the second beam. This can reduce measurement overheads of the second terminal device, and speed up the beam recovery procedure.

In some other embodiments, the second terminal device knows, through measurement, that received quality on a plurality of candidate beams reaches a first threshold, and may randomly select one of the plurality of candidate beams as the second beam.

In some other embodiments, the second terminal device may compare received quality after measuring the first reference signal carried on all candidate beams. When the best received quality is greater than a first threshold, a candidate beam corresponding to the best received quality is used as the second beam. In this way, a beam with best received quality can be selected as the second beam, to improve quality of communication between the first terminal device and the second terminal device after beam recovery.

After determining the second beam, the second terminal device may send beam recovery indication information to the first terminal device. The beam recovery indication information may be sent via a MAC CE, PC5-S, or PC5-RRC.

The second terminal device sends candidate beam recovery indication information to the first terminal device, where the beam recovery indication information includes beam indication information. Correspondingly, the first terminal device receives the beam recovery indication information from the second terminal device, where the beam recovery indication information includes the beam indication information. The beam indication information indicates the second beam. Reference signal received quality on the second beam meets the first threshold. As described above, the second beam may alternatively be a candidate beam corresponding to a first reference signal with best received quality.

The beam recovery indication information may implicitly indicate the second beam. In other words, the second terminal device knows, via the first information, the transmit resources of the candidate beams, which are one-to-one correspond to the candidate beams for sending the reference signal. In this way, the resources of the candidate beams may be sent to the first terminal device via the beam recovery indication information, so that the first terminal device may know a specific correspondence of the second beam.

Alternatively, the beam recovery indication information may explicitly indicate the second beam. For example, when sending the first information, the second terminal device may send the resources of the candidate beams with corresponding beam identifier to the second terminal device, so that the second terminal device may send the corresponding beam identifiers to the first terminal device via the beam recovery indication information.

The beam recovery indication information may indicate the second beam via at least one of the following:
a beam number, a beam management resource number, a sidelink signal resource number, an absolute index of the beam, a relative index of the beam, a logical index of the beam, an index of an antenna port corresponding to the beam, an index of an antenna port group corresponding to the beam, beam pair link (beam pair link, BPL) information, a transmit parameter (Tx parameter) corresponding to the beam, a receive parameter (Rx parameter) corresponding to the beam, a transmit weight corresponding to the beam, a weight matrix corresponding to the beam, a weight vector corresponding to the beam, a receive weight corresponding to the beam, an index of the transmit weight corresponding to the beam, an index of the weight matrix corresponding to the beam, an index of the weight vector corresponding to the beam, an index of the receive weight corresponding to the beam, a receive codebook corresponding to the beam, a transmit codebook corresponding to the beam, an index of the receive codebook corresponding to the beam, an index of the transmit codebook corresponding to the beam, or the like.

The beam recovery indication information may further carry an identifier of the first carrier. In this way, when the first terminal device is further connected to another terminal device and needs to perform beam recovery on another carrier, the first terminal device may know that the beam recovery indication information is used for beam recovery on the first carrier.

The first threshold may be determined by the first terminal device or the network device, and is sent by the first terminal device to the second terminal device. The first threshold may be sent to the second terminal device with the resources of the candidate beams via the first information, or may be separately sent by the first terminal device to the second terminal device, for example, separately sent to the second terminal device via PC5-RRC. The first threshold is a threshold for beam recovery. In other words, the second terminal device can send the beam recovery indication information to the first terminal device only when received quality on a candidate beam reaches the first threshold.

The received quality may be determined when L1 or L3 RSRP, RSRQ, or SINR for determining the beam failure is greater than the first threshold.

In an embodiment of this application, the second terminal device needs to successfully receive the first reference signal, so that the second terminal device can measure received quality of the first reference signal. There are the following three criteria for determining, by the second terminal device, that the first reference signal is successfully received.

For example, received quality of the first reference signal received by the second terminal device exceeds the preset threshold.

For another example, the first reference signal received by the second terminal device is successfully decoded.

For still another example, the received quality of the first reference signal received by the second terminal device does not exceed the preset threshold, and a single decoding for the first reference signal fails, but the second terminal device successfully decodes the first reference signal next time. In this case, it can also be determined that the first reference signal is successfully received through HARQ soft combination, and a next operation is performed.

After receiving the beam indication information from the second terminal device, the first terminal device may send a feedback to the second terminal device. Specifically, the first terminal device sends a beam recovery indication feedback to the second terminal device. Correspondingly, the second terminal device receives the beam recovery indication feedback from the first terminal device, where the beam recovery indication feedback is used to provide a feedback on the beam recovery indication information.

The beam recovery indication feedback may be a HARQ ACK feedback. In this case, because the first carrier is actually available, the first terminal device may send the beam recovery indication feedback to the second terminal device via the first carrier, or may send the beam recovery indication feedback via the second carrier in normal communication.

After receiving the HARQ ACK feedback, the second terminal device determines that beam recovery on the first carrier succeeds, and the first terminal device may normally communicate with the second terminal device based on the second beam on the first carrier.

The first terminal device feeds back the HARK ACK after receiving the beam recovery indication information, to ensure that the two terminal devices have a same understanding on beam recovery, and avoid a contingency in which the second terminal device and the first terminal device have different understandings on beam recovery because the first terminal device abnormally decodes the beam recovery indication information.

When sending the beam recovery indication information, the second terminal device usually combines the information and a data packet into a transport block, and sends the transport block to the first terminal device. In this way, the first terminal device can perform feedback only on the transport block, and the second terminal device cannot know whether the first terminal device receives the information. To resolve the problem, a manner of communication between the first terminal device and the second terminal device is further described.

In some embodiments, the second terminal device may not send the beam recovery indication information with the data, so that the first terminal device may separately feed back the HARQ ACK for the beam recovery indication information. The beam recovery indication information may be transmitted via MAC CE, PC5-S, or PC5-RRC signaling, and the MAC CE for the beam recovery indication information is a dedicated MAC CE.

In some other embodiments, the second terminal device combines the beam recovery indication information and the data into a transport block for sending, so that the first terminal device may send, based on a predefined or agreed rule, a HARQ ACK for the data on the second carrier, and send a HARQ ACK for the beam recovery indication on the first carrier (in this case, the first terminal device has determined that beam recovery succeeds, and the first carrier is available).

In some other embodiments, the second terminal device combines the beam recovery indication information and the data into a transport block for sending. When receiving the transport block including the beam recovery indication information, the first terminal device may feed back only a dedicated HARQ ACK for the beam recovery indication information.

Regardless of activation or deactivation of the resources of the candidate beams sent by the first terminal device to the second terminal device, when the first terminal device determines the beam failure, the first terminal device starts a beam recovery timer when determining the beam failure. If the beam recovery indication information sent by the second terminal device has not been received by the first terminal device when the timer expires, the first terminal device may consider that beam recovery fails, and restart beam recovery or directly perform beam pairing again, to prevent a long-time beam failure from impacting on signal transmission on the sidelink.

When the beam failure is determined by the second terminal device:
In some embodiments, after a quantity of times for which the second terminal device sends the beam recovery indication information to the first terminal device reaches a preset maximum value, if no beam recovery indication feedback (HARQ ACK) is received from the first terminal device, the second terminal device may consider that the beam fails, and may send corresponding signaling to the first terminal device. The first terminal device and the second terminal device may perform a next operation, for example, beam re-pairing, to prevent a long-time beam failure from impacting signal transmission on the sidelink.

In some other embodiments, the second terminal device starts a beam recovery timer when sending the beam recovery indication information to the first terminal device. If the beam recovery indication feedback sent by the first terminal device has not been received after the timer expires, the second terminal device may consider that beam recovery fails, and perform a subsequent operation.

According to the technical solution of this application, the second terminal device sends the beam recovery indication information to the first terminal device, and needs to obtain the beam recovery indication feedback from the first terminal device. In this way, the first terminal device and the second terminal device have a consistent understanding on a beam recovery result, to improve reliability of a result of determining that the beam recovery succeeds after the beam failure.

When the second carrier between the first terminal device and the second terminal device does not have a resource for sending corresponding signaling, the first terminal device or the second terminal device needs to obtain the corresponding resource. The following uses the beam recovery indication information as an example to describe a specific resource obtaining manner.

In some embodiments, a resource configuration manner on the sidelink is the mode 1. The second terminal device needs to send resource request information to a second network device, so that the second network device sends resource indication information to the second terminal device, to indicate a transmit resource on the second carrier. The resource indication information may include an identifier of the second carrier and a configured resource identifier.

In this embodiment, the second terminal device may send a dedicated resource scheduling request (scheduling request, SR) configuration to the second network device before the second terminal device needs the transmit resource. In this way, the second network device can coordinate the resources in advance, and when the second terminal device subsequently obtains the transmit resource via the dedicated resource SR, the resource obtained through coordination is directly sent to the second terminal device via the resource indication information, without further coordination. A resource configuration delay is shortened.

The second terminal device may send the dedicated resource scheduling request configuration to the second network device via RRC, sidelink user information (sidelink user information, SUI), or UAI.

In some other embodiments, resource allocation on the sidelink is the mode 2. A plurality of links including the sidelink between the first terminal device and the second terminal device contend for using a pre-configured resource set. The second terminal device can demodulate SCI information of a sidelink on which another terminal device is located, to learn of an occupied resource, and select an unoccupied resource from the pre-configured resource set as the transmit resource for the beam recovery indication information.

A procedure of obtaining a transmit resource on the second carrier via another piece of signaling is similar. For brevity, details are not described herein again.

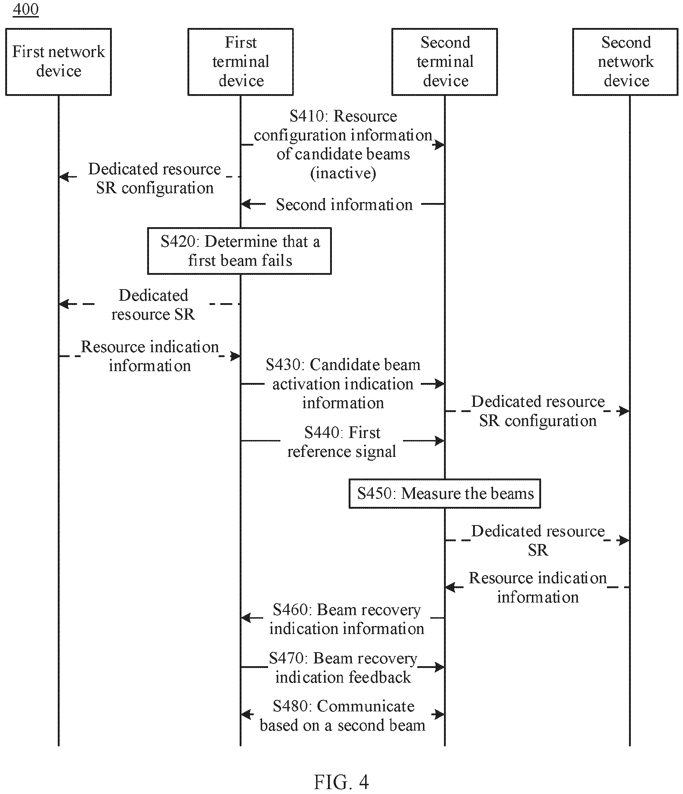

FIG. 4 is a schematic flowchart of a beam failure recovery method according to an embodiment of this application. The method may be used to implement the method 300, and describes how to perform beam failure recovery in a scenario in which a first terminal device determines that a beam failure occurs and pre-configures a deactivated or inactive resource of a candidate beam.

The first terminal device communicates with a second terminal device based on a second carrier and a first carrier. The second carrier is an anchor carrier, and the first carrier is a secondary carrier.

Before S410, a procedure in which the first terminal device and the second terminal device normally communicate with each other based on the second carrier, and perform beam pairing for the first carrier is included. For related steps, refer to the descriptions in the method 200.

S410: The first terminal device sends resource configuration information of candidate beams to the second terminal device.

The resource configuration information of the candidate beams may be equivalent to the first information, and includes resources of the candidate beams and a first threshold for beam recovery. The resource configuration information of the candidate beams may be sent by the first terminal device to the second terminal device via PC5-RRC information based on the second carrier on which normal communication is performed. The resource of the candidate beam includes a time-frequency resource, a space resource, or the like of the candidate beam, and the time-frequency resource or the space resource is deactivated.

S420: The first terminal device determines that a first beam fails.

Before S420, the second terminal device further sends second information to the first terminal device, where the second information includes a NACK feedback for the first beam, a feedback of a quantity of discontinuous transmissions for the first beam, and measurement information for the first beam. In this way, the first terminal device may determine, based on the second information sent by the second terminal device, that the beam failure occurs on the first beam on the first carrier.

In S420, after determining that the first beam on the first carrier fails, the first terminal device activates the resources of the candidate beams, triggers sending of candidate beam activation indication information, and starts a beam recovery timer.

S430: The first terminal device sends the candidate beam activation indication information to the second terminal device.

The candidate beam activation indication information may be sent via MAC CE, PC5-RRC, or PC5-S signaling, to indicate that the deactivated time-frequency resource or space resource configured in S410 has been activated.

The figure further shows a procedure in which the first terminal device requests a resource from a first network device when the first terminal device does not have a transmit resource. In other words, the first terminal device may send the dedicated resource SR configuration to the first network device in advance. After determining that the first beam fails, the first terminal device sends the dedicated resource SR to the first network device, to receive resource indication information from the first network device, and send the candidate beam activation indication information via a resource indicated by the resource indication information. For specific details, refer to the foregoing descriptions. Details are not described herein again.

S440: The first terminal device sends a first reference signal to the second terminal device.

In S440, the first terminal device activates the resources of the candidate beams by sending the first reference signal to the second terminal device.

S450: The second terminal device measures the candidate beams.

In S440, when receiving the candidate beam activation indication information sent by the first terminal device, the second terminal device starts to receive the first reference signal, and measures the first reference signal, for example, may measure a parameter, for example, L1 or L3 RSRP, RSRQ, or SINR.

When a measurement result is greater than a first threshold, this may trigger sending of beam recovery indication information to the first terminal device.

S460: The second terminal device sends the beam recovery indication information to the first terminal device.

If currently there is no corresponding transmit resource on the sidelink on the second carrier, the second terminal device may request a corresponding resource from a second network device. For a specific procedure, refer to the foregoing descriptions. Details are not described herein again.

The beam recovery indication information may be sent via the MAC CE, PC5-RRC, or PC5-S signaling, and may include explicit or implicit indication information of a candidate beam with received quality exceeds the first threshold.

S470: The first terminal device sends a beam recovery indication feedback to the second terminal device.

The beam recovery indication feedback may be a HARQ ACK feedback.

S480: The first terminal device and the second terminal device communicate with each other based on a second beam on the first carrier.

The second beam is the candidate beam with received quality exceeds the first threshold. It may be understood that in S420, the first terminal device starts a beam recovery timer. When the beam recovery timer expires, and the first terminal device has not received the beam recovery indication information sent by the second terminal device, the first terminal device determines that beam recovery fails.

In the technical solution of the method 400, the first terminal device pre-configures the resources of the candidate beams for the sidelink on the first carrier, and the resources are activated after the beam failure occurs on the first beam on the first carrier. This can reduce sweeping overheads of the first terminal device and measurement overheads of the second terminal device, and speed up a beam recovery procedure.

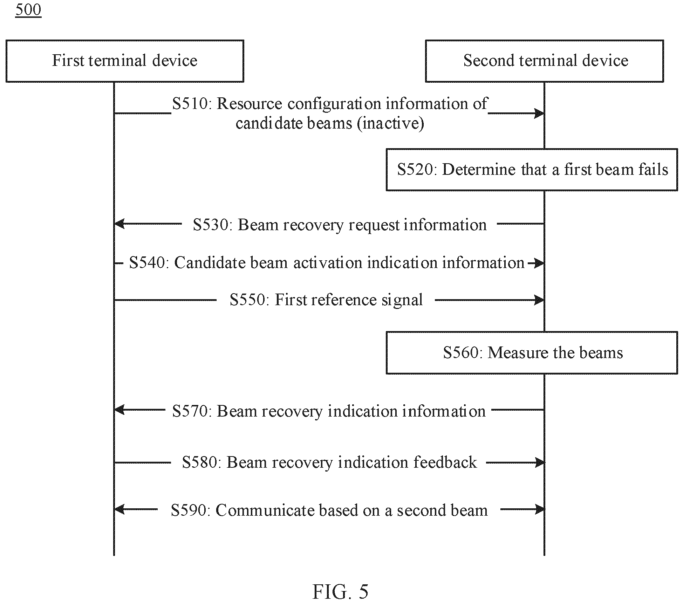

FIG. 5 is a schematic flowchart of a beam failure recovery method according to an embodiment of this application.

Different from the technical solution of the method 400 shown in FIG. 4 in which the beam failure is determined by the first terminal device, in the technical solution shown in FIG. 5, a beam failure is determined by a second terminal device.

Before S510, a procedure in which a first terminal device and the second terminal device normally communicate with each other based on the second carrier, and perform beam pairing for the first carrier is included. For related steps, refer to the descriptions in the method 200.

S510: The first terminal device sends a resource configuration parameter to the second terminal device.

Resource configuration information of candidate beams includes resources of candidate beams and a first threshold for beam recovery, and may further include a resource that is configured by the first terminal device for the second terminal to perform beam failure detection. The second terminal device may measure communication quality on the first carrier via the beam failure detection resource.

S520: The second terminal device determines that a beam failure occurs on a first beam on the first carrier.

When communication quality of the first beam is poor, the second terminal device may determine, based on a specific preset condition, that the beam failure occurs on the first beam on the first carrier, and trigger a beam recovery procedure.

S530: The second terminal device sends beam recovery request information to the first terminal device.

The second terminal device sends the beam recovery request information to the first terminal device when the beam failure occurs on the first beam on the first carrier, so that the first terminal device may know that the beam failure occurs, and perform a further operation.

S540: The first terminal device sends candidate beam activation indication information to the second terminal device.

The first terminal device knows, based on the received beam recovery request information, that the beam fails, activates the resources of the candidate beams, and indicates, via the candidate beam activation indication information, that the resources of the candidate beams have been activated, to prepare for the beam recovery procedure.

S550: The first terminal device sends a first reference signal to the second terminal device.

When the first terminal device activates the resources of the candidate beams, the first terminal device starts to send the first reference signal, and the second terminal device receives the first reference signal based on the resources of the candidate beams.

S560: The second terminal device measures the beams.

S570: The second terminal device sends beam recovery indication information to the first terminal device.

After obtaining, through measurement, the first reference signal with received quality that meets the threshold, the second terminal device may send, to the first terminal device, an identifier of a candidate beam corresponding to the first reference signal, that is, a second beam, via the beam recovery indication information.

S580: The first terminal device sends a beam recovery indication feedback to the second terminal device.

S590: The first terminal device and the second terminal device communicate with each other based on the second beam.

If a predetermined quantity of times for which the second terminal device sends the beam recovery indication information to the first terminal device reaches a maximum value in S570, but the second terminal device has not been received the beam recovery indication feedback sent by the first terminal device, the second terminal device may consider that the beam recovery fails, and may trigger a procedure of re-pairing the first terminal device and the second terminal device.

Alternatively, if the beam recovery indication feedback sent by the first terminal device has not been received after a beam recovery timer started when the beam recovery indication information is sent in S570 expires, the second terminal device may consider that the beam recovery fails, and may trigger a procedure of re-pairing the first terminal device and the second terminal device.

In the technical solution shown in FIG. 5, the beam failure is determined by the second terminal device which serves as a receive terminal device. Compared with the solution in which the first terminal device determines the beam failure, in the technical solution shown in FIG. 5, because the second terminal device is the receive terminal device for a signal, it is easier to determine the beam failure, and a measurement result does not need to be fed back to the first terminal device. In this way, beam failure can be quickly determined, and beam recovery can be performed, to reduce impact on signal transmission and reception.

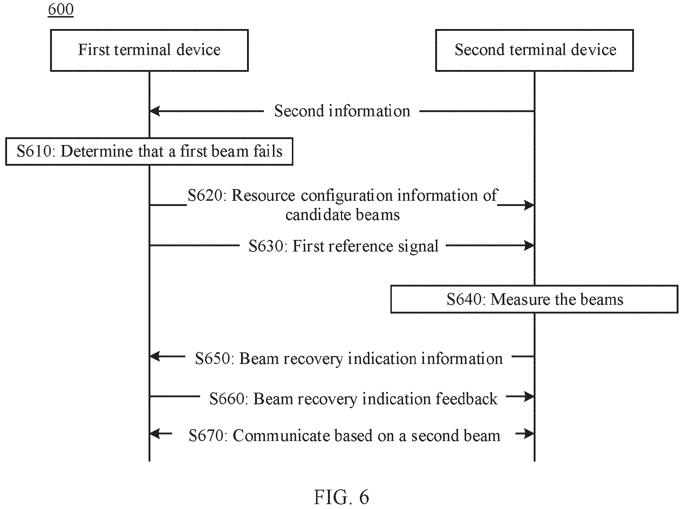

FIG. 6 is a schematic flowchart of a beam failure recovery method according to an embodiment of this application.

Different from the technical solution shown in FIG. 4 or FIG. 5 in which the inactive resource of the candidate beam is pre-configured, in the technical solution shown in FIG. 6, a resource of a candidate beam for beam failure recovery is activated.

Before S610, a procedure in which a first terminal device and the second terminal device normally communicate with each other based on the second carrier, and perform beam pairing for the first carrier is included. For related steps, refer to the descriptions in the method 200.

S610: The first terminal device determines that a first beam fails.

In S610, after determining that the first beam on the first carrier fails, the first terminal device starts a beam recovery timer.

Before S610, the second terminal device further sends, to the first terminal device via second information, a measurement result or other feedback information that includes communication quality of the first carrier, so that the first terminal device may determine, based on the second information, that the first beam on the first carrier fails.

S620: The first terminal device sends resource configuration information of candidate beams to the second terminal device.

In S620, resources of the candidate beams included in the configuration information of the candidate beams sent by the first terminal device are activated, and the configuration information of the candidate beams further includes a first threshold for beam recovery.

S630: The first terminal device sends a first reference signal to the second terminal device.

When the first terminal device sends the activated resources of the candidate beams to the second terminal device, the first terminal device starts to send the first reference signal.

S640: The second terminal device measures the beams.

Received quality of a first reference signal carried on a second beam in the candidate beams meets a first threshold.

S650: The second terminal device sends beam recovery indication information to the first terminal device.

The beam recovery indication information carries identifier information of the second beam.

S660: The first terminal device sends feedback information for beam recovery indication to the second terminal device.

S670: The first terminal device and the second terminal device communicate with each other based on the second beam.

In the technical solution shown in FIG. 6, after determining that the beam fails, the first terminal device directly sends the activated resources of the candidate beams to the second terminal device. This reduces complexity of a procedure in which inactive resources of candidate beams are pre-configured and the resource are activated via the candidate beam activation indication information, and improves operability of beam failure detection and recovery procedures.

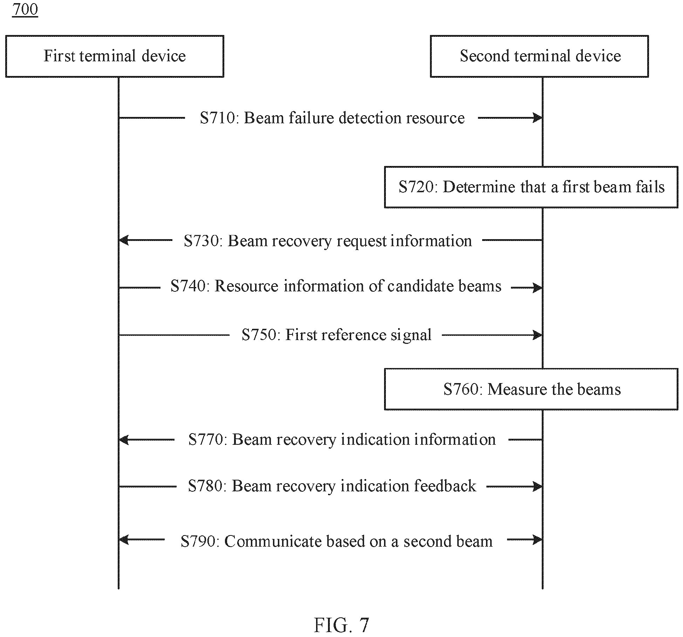

FIG. 7 is a schematic flowchart of a beam failure recovery method according to an embodiment of this application.

Different from the technical solution shown in FIG. 6 in which the beam failure is determined by the first terminal device, in the technical solution shown in FIG. 7, a beam failure is determined by a second terminal device.

Before S710, a procedure in which a first terminal device and the second terminal device normally communicate with each other based on the second carrier, and perform beam pairing for the first carrier is included. For related steps, refer to the descriptions in the method 200.

S710: The first terminal device sends a beam failure detection resource to the second terminal device.

S720: The second terminal device determines that a first beam fails.

S730: The second terminal device sends beam recovery request information to the first terminal device.

In S730, the second terminal device sends the beam recovery request information to the first terminal device, to trigger the first terminal device to configure resources of candidate beams.

S740: The first terminal device sends resource information of the candidate beams to the second terminal device.

In S740, the resource information of the candidate beams indicates the resources of the candidate beams, and the resources are activated.

S750: The first terminal device sends a first reference signal to the second terminal device.

In S740, when the first terminal device sends the resource information of the candidate beams, the first terminal device sends the first reference signal, to trigger the second terminal device to measure the beams for the first reference signal.

Optionally, the first terminal device may send resource configuration information of the candidate beams to the second terminal device before the second terminal device determines the beam failure. The information may be sent with the beam failure detection resource to the second terminal device. In this way, after sending the resource configuration information of the candidate beams, the first terminal device periodically sends the first reference signal, so that after determining that the beam failure occurs, the second terminal device can directly sweep and measure the first reference information without sending the beam recovery request information to the first terminal device (S730), to continue a subsequent operation.

S760: The second terminal device measures the beams.

S770: The second terminal device sends beam recovery indication information to the first terminal device.

In S770, the beam recovery indication information carries a second beam with received quality that meets a first threshold, and the second beam is one of the candidate beams.

S780: The first terminal device sends a beam recovery indication feedback to the second terminal device.

S790: The first terminal device and the second terminal device communicate with each other based on the second beam.

In the technical solution in FIG. 7, after the second terminal device determines that the beam failure occurs, the first terminal device sends the activated resources of the candidate beams to the second terminal device, so that the second terminal device can measure the first reference signal. This reduces waste caused by a pre-configuration of the resources, implements on-demand resource allocation, and flexibly performs beam recovery.

In this application, only an example in which the first terminal device communicates with the second terminal device based on the second carrier and the first carrier is used for describing the beam failure and recovery procedures. In another case, the first terminal device and the second terminal device may further include the second carrier, a fourth carrier, and the like. A quantity of communication carriers between the first terminal device and the second terminal device is not limited in this application.

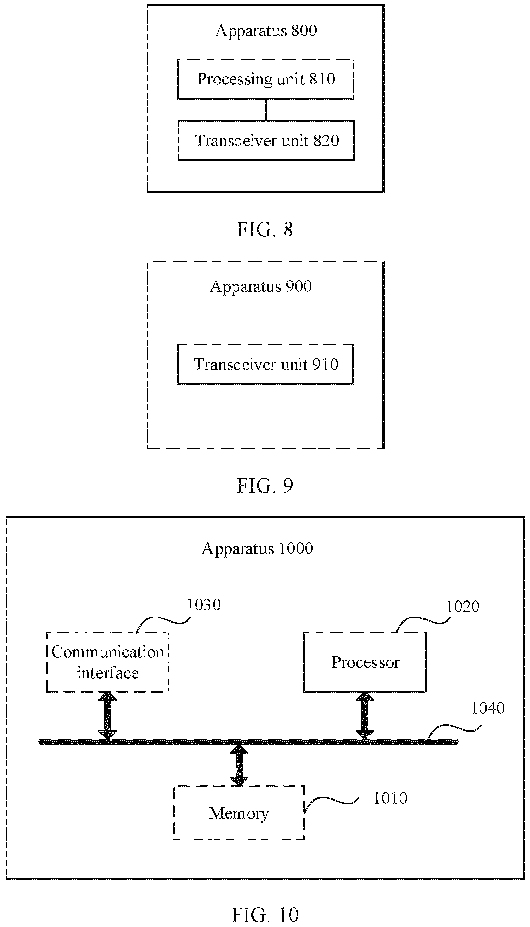

FIG. 8 is a block diagram of a beam failure recovery apparatus according to an embodiment of this application.

The apparatus includes: a processing unit 810, configured to: after a beam failure occurs on a first beam on a first carrier, activate resources of candidate beams on the first carrier, where the resources of the candidate beams are transmit resources of a plurality of candidate beams of the apparatus, and the first beam is a beam used for communication between the first terminal device and a second terminal device; and a transceiver unit 820, configured to communicate with the second terminal device based on a second beam, where the second beam is one of the candidate beams.

The processing unit 810 activates the resources of the candidate beams on the first carrier after the beam failure, so that a beam recovery procedure can be performed. The transceiver unit 820 is finally used for communication based on the second beam in the candidate beams. This can reduce transmit overheads caused by sweeping beams by the beam recovery apparatus before the beam failure.

Optionally, the transceiver unit 820 is further configured to send first information to the second terminal device, where the first information indicates the resources of the candidate beams, and the resources of the candidate beams are deactivated.

The transceiver unit 820 is further configured to send candidate beam activation indication information to the second terminal device, to indicate that the deactivated resources of the candidate beams have been activated.

Optionally, the processing unit 810 is specifically configured to send first information to the second terminal device, where the first information indicates the resources of the candidate beams, and the resources of the candidate beams are activated.

Optionally, the transceiver unit 820 is further configured to receive second information from the second terminal device, where the second information includes at least one of the following: a NACK feedback for the first beam, a feedback of a quantity of discontinuous transmissions for the first beam, and measurement information for the first beam. The processing unit 810 is further configured to determine, based on the second information, that the beam failure occurs on the first beam on the first carrier.

Optionally, that a beam failure occurs on a first beam on a first carrier is determined by the second terminal device. The transceiver unit 820 is further configured to receive beam recovery request information from the second terminal device, where the beam recovery request information is used to trigger the first terminal device to activate the resources of the candidate beams on the first carrier.

Optionally, the first information further includes configuration information of a beam failure detection resource, where the configuration information of the beam failure detection resource indicates the beam failure detection resource. The second terminal device determines, based on the beam failure detection resource, that the beam failure occurs on the first beam on the first carrier.

Optionally, the transceiver unit 820 is further configured to: receive beam recovery indication information from the second terminal device, where the beam recovery indication information includes beam indication information, and the beam indication information indicates the second beam; and send a beam recovery indication feedback to the second terminal device, where the beam recovery indication feedback is used to provide a feedback on the beam recovery indication information.

Optionally, received quality of a first reference signal carried on the second beam meets a first threshold, and the first threshold is included in the first information.

Optionally, the beam recovery indication information is transmitted with data.

Optionally, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and a second carrier. The second carrier is a carrier used for communication between the first terminal device and the second terminal device.

Optionally, the beam recovery indication information is separately transmitted.

FIG. 9 is a block diagram of a beam failure recovery apparatus according to an embodiment of this application.

The apparatus includes: a transceiver unit 910, configured to perform one of the following operations after a beam failure occurs on a first beam on a first carrier: receiving candidate beam activation indication information from a first terminal device, where the candidate beam activation indication information indicates that resources of candidate beams on the first carrier have been activated, and the resources of the candidate beams indicate transmit resources of a plurality of candidate beams of the first terminal device; and communicating with the first terminal device based on a second beam, where the second beam is one of the candidate beams; or receiving first information from a first terminal device, where the first information indicates resources of candidate beams on the first carrier, and the resources of the candidate beams are activated; and communicating with the first terminal device based on a second beam, where the second beam is one of the candidate beams.

After the beam failure occurs on the first beam on the first carrier, the beam recovery apparatus knows, by receiving the candidate beam activation indication information from the first terminal device, that the resources of the candidate beams have been activated, or receives the first information from the first terminal device, where the first information indicates the resources of the candidate beams, to finally determine the second beam based on the two manners, to reduce measurement overheads caused by measuring beams in advance.

Optionally, the transceiver unit 910 is further configured to receive first information from the first terminal device, where the first information indicates the resources of the candidate beams on the first carrier, and the resources of the candidate beams are deactivated.

Optionally, that a beam failure occurs on a first beam on a first carrier is determined by the first terminal device based on second information, and the transceiver unit 910 is further configured to send the second information to the first terminal device, where the second information includes at least one of the following: a NACK feedback for the first beam, a feedback of a quantity of discontinuous transmissions for the first beam, and measurement information for the first beam.

Optionally, the apparatus further includes a processing unit, configured to determine that a beam failure occurs on a first beam on a first carrier. The transceiver unit 910 is further configured to send beam recovery request information to the first terminal device.

Optionally, the first information further includes configuration information of a beam failure detection resource, where the configuration information of the beam failure detection resource indicates the beam failure detection resource. The processing unit is specifically configured to determine, based on the beam failure detection resource, that the beam failure occurs on the first beam on the first carrier.

Optionally, the transceiver unit 910 is further configured to: send candidate beam recovery indication information to the first terminal device, where the beam recovery indication information includes beam indication information, and the beam indication information indicates the second beam; and receive a beam recovery indication feedback from the first terminal device, where the beam indication feedback is used to provide a feedback on the beam recovery indication information.

Optionally, received quality of a first reference signal carried on the second beam meets a first threshold, and the first threshold is included in the first information.

Optionally, the beam recovery indication information is transmitted with data.

Optionally, the beam recovery indication feedback includes a first feedback and a second feedback. The first feedback is used to provide a feedback on the data. The second feedback is used to provide a feedback on the beam recovery indication information. The first feedback and the second feedback are respectively carried on the first carrier and the first carrier.

Optionally, the beam recovery indication information is separately transmitted.

FIG. 10 is a block diagram of an apparatus according to an embodiment of this application.

An apparatus 1000 shown in FIG. 10 may correspond to the apparatus described above. Specifically, the apparatus 1000 may be a specific example of the first terminal device or the second terminal device in FIG. 1. The apparatus 1000 includes a processor 1020. In an embodiment of this application, the processor 1020 is configured to implement a corresponding control and management operation. For example, the processor 1020 is configured to support the apparatus to perform the methods, operations, or functions shown in FIG. 3 to FIG. 7 in the foregoing embodiments. Optionally, the apparatus 1000 may further include a memory 1010 and a communication interface 1030. The processor 1020, the communication interface 1030, and the memory 1010 may be connected to each other or connected to each other via a bus 1040. The communication interface 1030 is configured to support the apparatus to perform communication, and the memory 1010 is configured to store program code and data of the apparatus. The processor 1020 invokes the code or data stored in the memory 1010 to implement a corresponding operation. The memory 1010 may or may not be coupled to the processor. The coupling in this embodiment of this application may be an indirect coupling or a communication connection between apparatuses, units, or modules in an electrical form, a mechanical form, or another form, and is used for information exchange between the apparatuses, the units, or the modules.

The processor 1020 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication interface 1030 may be a transceiver, a circuit, a bus, a module, or another type of communication interface. The bus 1040 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 10, but this does not mean that there is only one bus or only one type of bus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly know that, for the purpose of convenient and brief descriptions, for a specific working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Abeam failure recovery method, comprising:
after a beam failure occurs on a first beam on a first carrier, activating, by a first terminal device, resources of candidate beams on the first carrier, wherein the resources of the candidate beams are transmit resources of a plurality of candidate beams of the first terminal device, and the first beam is a beam used for communication between the first terminal device and a second terminal device; and
communicating with, by the first terminal device, the second terminal device based on a second beam, wherein the second beam is one of the plurality of candidate beams.

2. The method according to claim 1, wherein before the beam failure occurs on the first beam on the first carrier, the method further comprises:
sending, by the first terminal device, first information to the second terminal device, wherein the first information indicates the resources of the candidate beams, and the resources of the candidate beams are deactivated.

3. The method according to claim 2, wherein the method further comprises:
sending, by the first terminal device, candidate beam activation indication information to the second terminal device, to indicate that the deactivated resources of the candidate beams have been activated.

4. The method according to claim 1, wherein the activating, by a first terminal device, resources of candidate beams on the first carrier comprises:
sending, by the first terminal device, first information to the second terminal device, wherein the first information indicates the resources of the candidate beams, and the resources of the candidate beams are activated.

5. The method according to any one of claims 1 to 4, wherein the method further comprises:
receiving, by the first terminal device, second information from the second terminal device, wherein the second information comprises at least one of the following:
a negative acknowledgment (non-acknowledgment, NACK) feedback for the first beam, a feedback of a quantity of discontinuous transmissions for the first beam, and measurement information for the first beam; and
determining, by the first terminal device based on the second information, that the beam failure occurs on the first beam on the first carrier.

6. The method according to any one of claims 1 to 3, wherein that a beam failure occurs on a first beam on a first carrier is determined by the second terminal device, and before the sending, by the first terminal device, candidate beam activation indication information to the second terminal device, the method further comprises:
receiving, by the first terminal device, beam recovery request information from the second terminal device, wherein the beam recovery request information is used to trigger the first terminal device to activate the resources of the candidate beams on the first carrier.

7. The method according to any one of claims 1 to 6, wherein the method further comprises:
receiving, by the first terminal device, beam recovery indication information from the second terminal device, wherein the beam recovery indication information comprises beam indication information, and the beam indication information indicates the second beam; and
sending, by the first terminal device, a beam recovery indication feedback to the second terminal device, wherein the beam recovery indication feedback is used to provide feedback on the beam recovery indication information.

8. Abeam failure recovery method, comprising:
after a beam failure occurs on a first beam on a first carrier, receiving, by a second terminal device, candidate beam activation indication information from a first terminal device, wherein the candidate beam activation indication information indicates that resources of candidate beams on the first carrier have been activated, and the resources of the candidate beams are transmit resources of a plurality of candidate beams of the first terminal device; and
communicating with, by the second terminal device, the first terminal device based on a second beam, wherein the second beam is one of the plurality of candidate beams.

9. The method according to claim 8, wherein before the beam failure occurs on the first beam on the first carrier, the method further comprises:
receiving, by the second terminal device, first information from the first terminal device, wherein the first information indicates the resources of the candidate beams on the first carrier, and the resources of the candidate beams are deactivated.

10. The method according to claim 8 or 9, wherein that a beam failure occurs on a first beam on a first carrier is determined by the first terminal device based on second information, and the method further comprises:
sending, by the second terminal device, the second information to the first terminal device, wherein
the second information comprises at least one of the following:
a NACK feedback for the first beam, a feedback of a quantity of discontinuous transmissions for the first beam, and measurement information for the first beam.

11. The method according to claim 8 or 9, wherein before the receiving, by a second terminal device, candidate beam activation indication information from a first terminal device, the method further comprises:
determining, by the second terminal device, that the beam failure occurs on the first beam on the first carrier; and
sending, by the second terminal device, beam recovery request information to the first terminal device when the beam failure occurs on the first beam on the first carrier.

12. The method according to any one of claims 8 to 11, wherein the method further comprises:
sending, by the second terminal device, candidate beam recovery indication information to the first terminal device, wherein the beam recovery indication information comprises beam indication information, and the beam indication information indicates the second beam; and
receiving, by the second terminal device, a beam recovery indication feedback from the first terminal device, wherein the beam indication feedback is used to provide feedback on the beam recovery indication information.

13. The method according to claim 7 or 12, wherein the beam recovery indication information is transmitted with data.

14. The method according to claim 7, 12, or 13, wherein the beam recovery indication feedback comprises a first feedback and a second feedback, the first feedback is used to provide a feedback on the data, the second feedback is used to provide a feedback on the beam recovery indication information, and the first feedback and the second feedback are respectively carried on the first carrier and a second carrier.

15. The method according to claim 7 or 12, wherein the beam recovery indication information is separately transmitted.

16. A beam failure recovery apparatus, comprising:
a processing unit, configured to: after a beam failure occurs on a first beam on a first carrier, activate resources of candidate beams on the first carrier, wherein the first beam is a beam used for communication between the apparatus and a second terminal device, and the resources of the candidate beams are transmit resources of a plurality of candidate beams of the apparatus; and
a transceiver unit, configured to communicate with the second terminal device based on a second beam, wherein the second beam is one of the candidate beams.

17. The apparatus according to claim 16, wherein
the transceiver unit is further configured to send first information to the second terminal device, wherein the first information indicates the resources of the candidate beams, and the resources of the candidate beams are deactivated.

18. The apparatus according to claim 16, wherein
the transceiver unit is further configured to send candidate beam activation indication information to the second terminal device, to indicate that the deactivated resources of the candidate beams have been activated.

19. The apparatus according to claim 16, wherein
the processing unit is specifically configured to send first information to the second terminal device, wherein the first information indicates the resources of the candidate beams, and the resources of the candidate beams are activated.

20. The apparatus according to any one of claims 16 to 19, wherein
the transceiver unit is further configured to receive second information from the second terminal device, wherein the second information comprises at least one of the following:
a NACK feedback for the first beam, a feedback of a quantity of discontinuous transmissions for the first beam, and measurement information for the first beam; and
the processing unit is further configured to determine, based on the second information, that the beam failure occurs on the first beam on the first carrier.

21. A beam failure recovery apparatus, comprising:
a transceiver unit, configured to: after a beam failure occurs on a first beam on a first carrier,
receive candidate beam activation indication information from a first terminal device, wherein the candidate beam activation indication information indicates that resources of candidate beams on the first carrier have been activated, and the resources of the candidate beams are transmit resources of a plurality of candidate beams of the first terminal device; and
communicate with the first terminal device based on a second beam, wherein the second beam is one of the candidate beams.

22. The apparatus according to claim 21, wherein
the transceiver unit is further configured to receive first information from the first terminal device, wherein the first information indicates the resources of the candidate beams, and the resources of the candidate beams are deactivated.

23. The apparatus according to claim 21 or 22, wherein
that a beam failure occurs on a first beam on a first carrier is determined by the first terminal device based on second information, and the transceiver unit is further configured to send the second information to the first terminal device, wherein
the second information comprises at least one of the following:
a NACK feedback for the first beam, a feedback of a quantity of discontinuous transmissions for the first beam, and measurement information for the first beam.

24. A communication apparatus, comprising:
a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 7 and 13 to 15 or the method according to any one of claims 8 to 15 by using a logic circuit or by executing code instructions.

25. A communication system, comprising:
the communication apparatus according to any one of claims 16 to 20; and/or
the communication apparatus according to any one of claims 21 to 23.

26. A computer-readable storage medium, wherein
the computer-readable storage medium stores a computer program, and when the computer program is run, a computer is enabled to perform the method according to any one of claims 1 to 7 and 13 to 15 or the method according to any one of claims 8 to 15.

27. A computer program product, wherein the computer program product comprises computer program code, and when the computer program code is run, the method according to any one of claims 1 to 7 and 13 to 15 or the method according to any one of claims 8 to 15 is implemented.
